(19) Europäisches Patentamt
European Patent Office
Office européen des brevets

(11) Veröffentlichungsnummer: **0 038 498**
**A2**

(12) # EUROPÄISCHE PATENTANMELDUNG

(21) Anmeldenummer: **81102784.6**

(22) Anmeldetag: **10.04.81**

(51) Int. Cl.³: **H 05 B 7/12**
H 05 B 7/08, H 05 B 7/085

(30) Priorität: **18.04.80 DE 3015018**

(43) Veröffentlichungstag der Anmeldung:
**28.10.81 Patentblatt 81/43**

(84) Benannte Vertragsstaaten:
**AT BE CH FR GB IT LI SE**

(71) Anmelder: **Korf-Stahl AG**
**Moltkestrasse 15**
**D-7570 Baden-Baden(DE)**

(72) Erfinder: **Schwabe, William, Dr.**
**13851 Chippewa Tr.**
**Middleburg Hts. Ohio 44130(US)**

(72) Erfinder: **Elsner, Emil, Dr.**
**Privatstrasse 14**
**CH-4563 Gerlafingen(CH)**

(72) Erfinder: **Marnette, Werner, Dr.**
**Feldweg 6**
**D-2114 Hollenstedt(DE)**

(74) Vertreter: **Blumbach Weser Bergen Kramer Zwirner Hoffmann Patentanwälte**
**Radeckestrasse 43**
**D-8000 München 60(DE)**

(54) **Verfahren zur Kühlung einer für die Erzeugung einer Bogenentladung verwendeten Elektrodenspitze.**

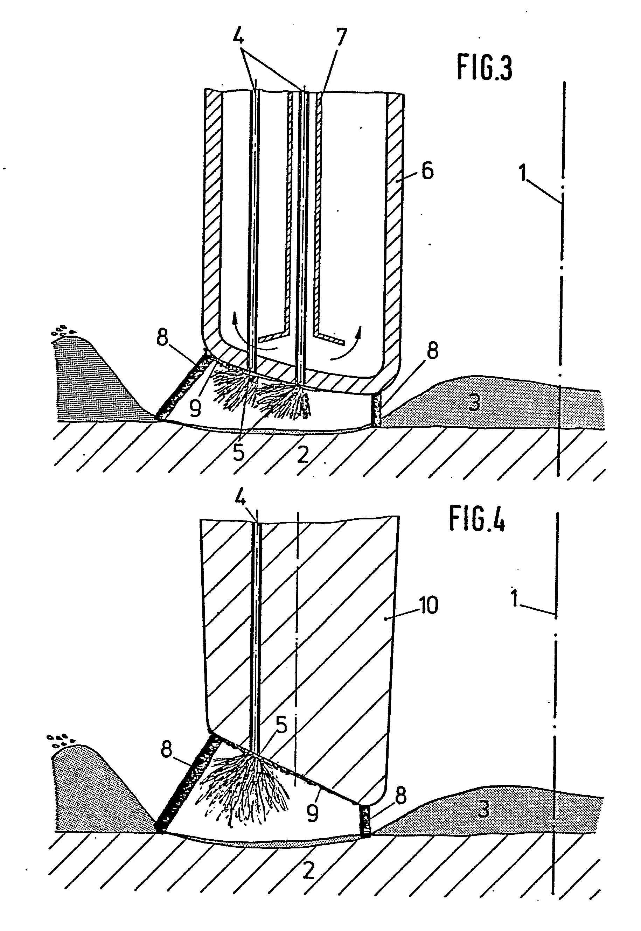

(57) Zur Kühlung der Elektrodenspitze einer Lichtbogenelektrode werden durch die Spitze (6,10) gasförmige oder flüssige unter Wärmeverbrauch spaltbare Stoffe in den Bereich zwischen der Spitze und der Gegenelektrode bzw. dem Schmelzgut (2) geleitet und dabei gespaltet (Fig. 3).

FIG.3

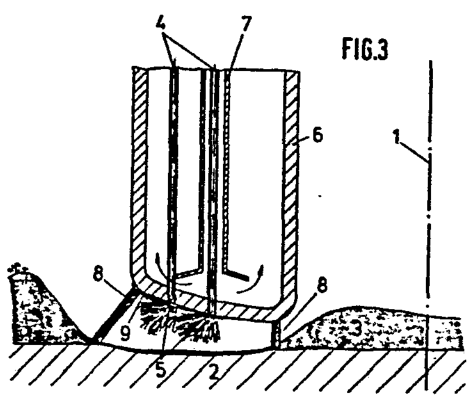


EP 0 038 498 A2

BLUMBACH · WESER · BERGEN · KRAMER
ZWIRNER · HOFFMANN

PATENTANWÄLTE IN MÜNCHEN UND WIESBADEN

Patentconsult Radeckestraße 43 8000 München 60 Telefon (089) 883603/883604 Telex 05-212313 Telegramme Patentconsult
Patentconsult Sonnenberger Straße 43 6200 Wiesbaden Telefon (06121) 562943/561998 Telex 04-186237 Telegramme Patentconsult

Korf-Stahl AG
Moltkestraße 15
7570 Baden-Baden
Bundesrepublik Deutschland

80/0107 EPC

# Verfahren zur Kühlung einer für die Erzeugung einer Bogenentladung verwendeten Elektrodenspitze

Die Erfindung betrifft ein Verfahren zur Kühlung einer für die Erzeugung einer Bogenentladung verwendeten Elektrodenspitze, insbesondere einer Elektrodenspitze für Lichtbogenöfen.

Durch die DE-ASen 27 39 483 und 19 20 411 sind flüssigkeitsgekühlte Elektroden für Lichtbogenöfen bekannt geworden, bei denen die Elektrodenspitze aus verzehrbarem bzw. aus nicht verzehrbarem Material besteht. Da die Kühlflüssigkeit - in der Regel Wasser - nicht mit dem Schmelzgut in Berührung kommen darf, kann die Oberfläche der Elektrodenspitze auch stets nur mittelbar über das Material dieser Spitze gekühlt werden.

Es ist bereits bekannt, Argonzusätze zur Stabilisierung des Lichtbogens in wechselstrombetriebenen metallurgischen Schmelzöfen vorzusehen. Die stabilisierende Wirkung des Argons wird auf die infolge metastabiler Anregungszustände erniedrigte Ionisierungsarbeit und auf die Erhöhung der Restleitfähigkeit der Bogensäule nach dem Polaritätswechsel bei Wechselstrombögen zurückgeführt.

Darüber hinaus ist die Zugabe von Wasserdampf, Ammoniak sowie pulverförmigen oxidischen Stoffen in den Lichtbogenbereich von Wechselstromöfen bekannt. Durch diese Maßnahmen wird die Stabilität und die Leistungsaufnahme der Entladungsstrecke dem metallurgischen Prozess entsprechend beeinflußt.

Ziel der Erfindung ist ein Verfahren zur Kühlung einer für die Erzeugung einer Bogenentladung verwendeten Elektrodenspitze, bei dem sich die Kühlwirkung des Kühlmittels unmittelbar auf der Oberfläche der Elektrodenspitze entfalten kann. Es soll gegenüber bekannten gekühlten Elektroden die Lebensdauer der Elektrodenspitze und damit der Elektrode wesentlich erhöht werden.

Das erfindungsgemäße Verfahren ist durch die Merkmale des Anspruchs 1 gekennzeichnet. Vorteilhafte Ausgestaltungen der Erfindung sind den Unteransprüchen zu entnehmen.

Bei dem erfindungsgemäßen Verfahren wird die zur thermischen Spaltung chemischer Stoffe erforderliche Wärme für die Kühlung der Elektrodenspitze ausgenutzt. Die Stoffe werden bis an die Oberfläche der Elektrodenspitze geführt und dort zersetzt, so daß sie ihre Kühlwirkung unmittelbar an der Oberfläche der Elektrodenspitze entfalten können. Vorzugsweise werden als spaltbare Stoffe Kohlendioxid oder Kohlenwasserstoffe verwendet.

Das erfindungsgemäße Verfahren ergibt bei verzehrbaren Graphitelektrodenspitzen den Vorteil eines geringeren Graphitverbrauchs, bei unverzehrbaren Elektrodenspitzen den Vorteil einer intensiveren Kühlung und somit einer erhöhten Standzeit der verwendeten Elektrodenwerkstoffe. Darüber hinaus ist bei der Einleitung von Kohlenwasserstoffen in den Bereich der Entladungszone zu erwarten, daß sich entsprechend der thermochemischen Eigenschaften der Stoffe und Verbindungen im System Kohlenstoff - Wasserstoff Spaltkohlenstoff auf der Elektrodenspitze ablagert.

Dies wird durch die Fig. 1 am Beispiel der thermischen Methanzersetzung verdeutlicht. In dieser Figur ist die temperaturabhängige Gleichgewichtszusammensetzung der Zersetzungsprodukte dargestellt. Beispielsweise liegen bei Wechselstrombogenentladungen die Temperaturen zwischen 3000 - 4000 K, so daß demnach der mit dem Methangas eingebrachte Kohlenstoff zu etwa 80% als Spaltkohlenstoff auftreten wird.

Durch die Kohlenstoffablagerung wird sowohl bei verzehrbaren als auch bei nichtverzehrbaren Elektrodenspitzen die Einsatzdauer erheblich verbessert.

Im Gegensatz zu Kohlenwasserstoffen führt die thermische Zersetzung von Kohlendioxid bei den in Bogenentladungen zu erwartenden Temperaturen im wesentlichen zu Kohlenmonoxid und Sauerstoff. Dies wird durch die Fig. 2 verdeutlicht, die wiederum auf der Annahme eines thermodynamischen Gleichgewichtszustandes beruht.

Findet bei der Einleitung von Kohlenwasserstoffverbindungen die Zersetzung und damit die Kohlenstoffablagerung in dem insbesondere bei verzehrbaren Elektrodenspitzen heißen Gaszuführungskanal innerhalb der Elektrode statt, können den Kohlenstoffwasserstoffverbindungen oxidierende Gase in der Menge beigemischt werden, daß die unerwünscht aufgetretenen Kohlenstoffablagerungen wieder durch Oxidation abgetragen werden.

Die bei der Zersetzung im Bereich der Bogenentladung entstandenen nicht auf der Elektrodenspitze abgeschiedenen Zersetzungsprodukte werden in einer gewissen Entfernung von der Elektrodenspitze mit dem Sauerstoff der Atmosphäre, dem durch die Zersetzung von Sauerstoffverbindungen entstehenden Sauerstoff oder mit dem in den Ofenraum zusätzlich eingeführten Sauerstoff verbrannt. Hierdurch wird dem System wieder für Schmelzreaktionen nutzbare Energie zugeführt.

Weiterhin führen die in den Bereich zwischen Elektrodenspitze und Gegenelektrode eingeleiteten Stoffe und deren Zersetzungsprodukte, insbesondere der bei Kohlenwasserstoffverbindungen entstehende Wasserstoff, zu einer Stabilisierung der Entladung, zu einer Erhöhung des thermischen Wirkungsgrades und zu einer Verminderung der insbesondere bei Wechselstromentladungen auftretenden Netzrückwirkungen führen.

Die Fig. 3 und 4 zeigen als Beispiel die Anwendung des Verfahrens bei einer Elektrodenspitze eines dreiphasig betriebenen Elektrolichtbogenofens. Die Fig. 3 stellt eine nichtverzehrbare Elektrodenspitze dar. Darin sind mit 1 die Mittellinie des Ofengefäßes, mit 2 das Metallbad und mit 3 die Schlacke bezeichnet. Die Elektrodenspitze besitzt zwei Kanäle 4 für die Zuleitung der spaltbaren Stoffe, die bei 5 in den Bereich zwischen Elektrodenspitze und Gegenelektrode, hier Metallbad 2, münden.

Mit 6 ist der Metallmantel der Elektrodenspitze bezeichnet. Die in Fig. 3 dargestellte Elektrodenspitze ist zusätzlich mit einer Wasserkühlung ausgestattet. Das Kühlwasser wird dabei durch das Zuführungsrohr 7 unmittelbar gegen die thermisch am stärksten beanspruchte Innenfläche der Elektrodenspitze geleitet und wird dann durch den zwischen dem Metallmantel 6 und dem Zuführungsrohr 7 gebildeten Ringspalt abgeführt. Mit 8 ist der Entladungskanal, hier in zwei verschiedenen Positionen, bezeichnet. Diese hier dargestellten Positionen des Entladungskanals können zum einen dem Zeitpunkt des Zündens der Bogenentladung nach dem Stromnulldurchgang und zum anderen der bei Strommaximum auftretenden Auslenkung der Bogenentladung zugeordnet werden.

Der durch die Einleitung von Kohlenwasserstoffverbindungen entstehende Spaltkohlenstoff bildet auf der Elektrodenspitze die Ablagerung 9.

Die Fig. 4 zeigt eine verzehrbare Graphitelektrodenspitze. dabei sind wieder mit 1 die Mittellinie des Ofengefäßes, mit 2 das Metallbad und mit 3 die Schlacke bezeichnet.

In der Fig. 4 erfolgt die Zuleitung der spaltbaren Stoffe durch den außermittig in der Elektrodenspitze 10 angeordneten Kanal 4, der wiederum bei 5 in den Bereich zwischen Elektrodenspitze und Gegenelektrode, hier Metallbad, mündet. In der Fig. 4 ist der Entladungskanal 8 entsprechend der Fig. 3 wieder in zwei Grenzpositionen dargestellt. Mit 9 sind Spaltkohlenstoffablagerungen auf der verzehrbaren Elektrodenspitze bezeichnet.

Nachfolgend sind einige hochsiedende Spaltprodukte, die für die Abscheidung auf einer verzehrbaren oder einer nicht verzehrbaren Elektrodenspitze geeignet sind, und die thermisch spaltbaren Stoffe aufgeführt, aus denen sie gewonnen werden. Als Beispiele für die Spaltprodukte sind Kohlenstoff, Nickel, Wolfram, Molybdän, Tantal genannt. Diese Elemente sind auch aus elektrotechnischer Sicht als Elektrodenwerkstoff geeignet. Es bedeuten jeweils in Grad Celsius

fp = Schmelzpunkt
kp = Siedepunkt.

1) Kohlenstoff

a) Gasförmige und flüssige Kohlenwasserstoffe

| | |
|---|---|
| b) Tetrachlorkohlenstoff ($CCl_4$) | fp = -23<br>kp = 76,8 |
| 2) Nickelcarbonyl | fp = -25 |
| $Ni(CO)_4$ | kp = 43<br>Dissoziation bei 140°C |
| 3) Wolfram | fp = 3 410<br>kp = 5 660 |
| a) Wolframhexachlorid $W Cl_6$ | fp = 275<br>kp = 346 |
| 4) Molybdän | fp = 2 617<br>kp = 4 612 |
| a) Molybdänpentachlorid $MoCl_5$ | fp = 194<br>kp = 268 |
| 5) Tantal | fp = 2 996<br>kp = 5 425 |
| a) Tantalpentachlorid $TaCl_5$ | fp = 216<br>kp = 242 |

80/0107 EPC

Patentansprüche:

1. Verfahren zur Kühlung einer für die Erzeugung einer Bogenentladung verwendeten Elektrodenspitze, dadurch gekennzeichnet, daß gasförmige und/oder flüssige, unter Wärmeverbrauch spaltbare Stoffe an einer oder mehreren Stellen (5) durch die Spitze der Elektrode in den Bereich zwischen dieser Elektrodenspitze und einer Gegenelektrode bzw. einem Schmelzgut geleitet und dabei gespalten werden.

2. Verfahren nach Anspruch 1, dadurch gekennzeichnet, daß spaltbare Stoffe ausgewählt sind, von denen jeweils wenigstens ein Spaltprodukt eine so hohe Sublimationstemperatur aufweist, daß es als fester Stoff auf der Elektrodenspitze kondensiert.

3. Verfahren nach Anspruch 1 oder 2, dadurch gekennzeichnet, daß spaltbare Stoffe ausgewählt sind, von denen wenigstens ein Spaltprodukt der thermischen Zersetzung ein Gas ist, das eine Verkürzung und Stabilisierung der Bogenentladung hervorruft.

4. Verfahren nach Anspruch 1 oder 2, dadurch gekennzeichnet, daß als spaltbarer Stoff Kohlendioxid eingeleitet wird.

5. Verfahren nach einem der Ansprüche 1 bis 4, dadurch gekennzeichnet, daß als spaltbarer Stoff eine Wasserstoffverbindung des Kohlenstoffes eingeleitet wird.

6. Verfahren nach einem der Ansprüche 1 bis 5, dadurch gekennzeichnet, daß die thermisch spaltbaren Stoffe bei Anwendung des Verfahrens an einem dreiphasigen Elektrolichtbogenofen mittig zur Elektrode und/oder außermittig an der der Ofenwand zugekehrten Seite aus der zu kühlenden Elektrodenspitze herausgeführt werden.

7. Verfahren nach einem der Ansprüche 1 bis 6, g e k e n n z e i c h n e t durch seine Anwendung bei einer Elektrodenspitze aus einem verzehrbaren Material.

8. Verfahren nach Anspruch 7, g e k e n n z e i c h n e t durch seine Anwendung bei einer Elektrodenspitze aus Graphit.

9. Verfahren nach einem der Ansprüche 1 bis 6, g e k e n n z e i c h n e t durch seine Anwendung bei einer Elektrodenspitze aus einem nichtverzehrbaren Material.

10. Verfahren nach Anspruch 9, g e k e n n z e i c h n e t durch seine Anwendung bei einer Elektrodenspitze aus Kupfer.

11. Verfahren nach Anspruch 10, g e k e n n z e i c h n e t durch seine Anwendung bei einer Elektrodenspitze aus mit Wolfram oder Molybdän beschichtetem Kupfer.

12. Verfahren nach einem der Ansprüche 9 bis 11, dadurch g e k e n n z e i c h n e t , daß die nichtverzehrbare Elektrodenspitze zusätzlich durch Wasser gekühlt wird.

13. Verfahren nach Anspruch 5, dadurch g e k e n n z e i c h n e t, daß zur Vermeidung einer Verstopfung der Zufuhrkanäle durch Spaltkohlenstoff den Kohlenwasserstoffverbindungen ein oxidierender Stoff, vorzugsweise Kohlendioxid, zugesetzt wird.

14. Elektrode zur Durchführung des Verfahrens nach einem der Ansprüche 1 bis 13, dadurch g e k e n n z e i c h n e t, daß sie wenigsten einen Kanal (4) für die Zuleitung thermisch spaltbarer Stoffe enthält, der in den vom Entladungskanal (8) überstrichenen Bereich der Elektrodenspitze mündet.

FIG.1

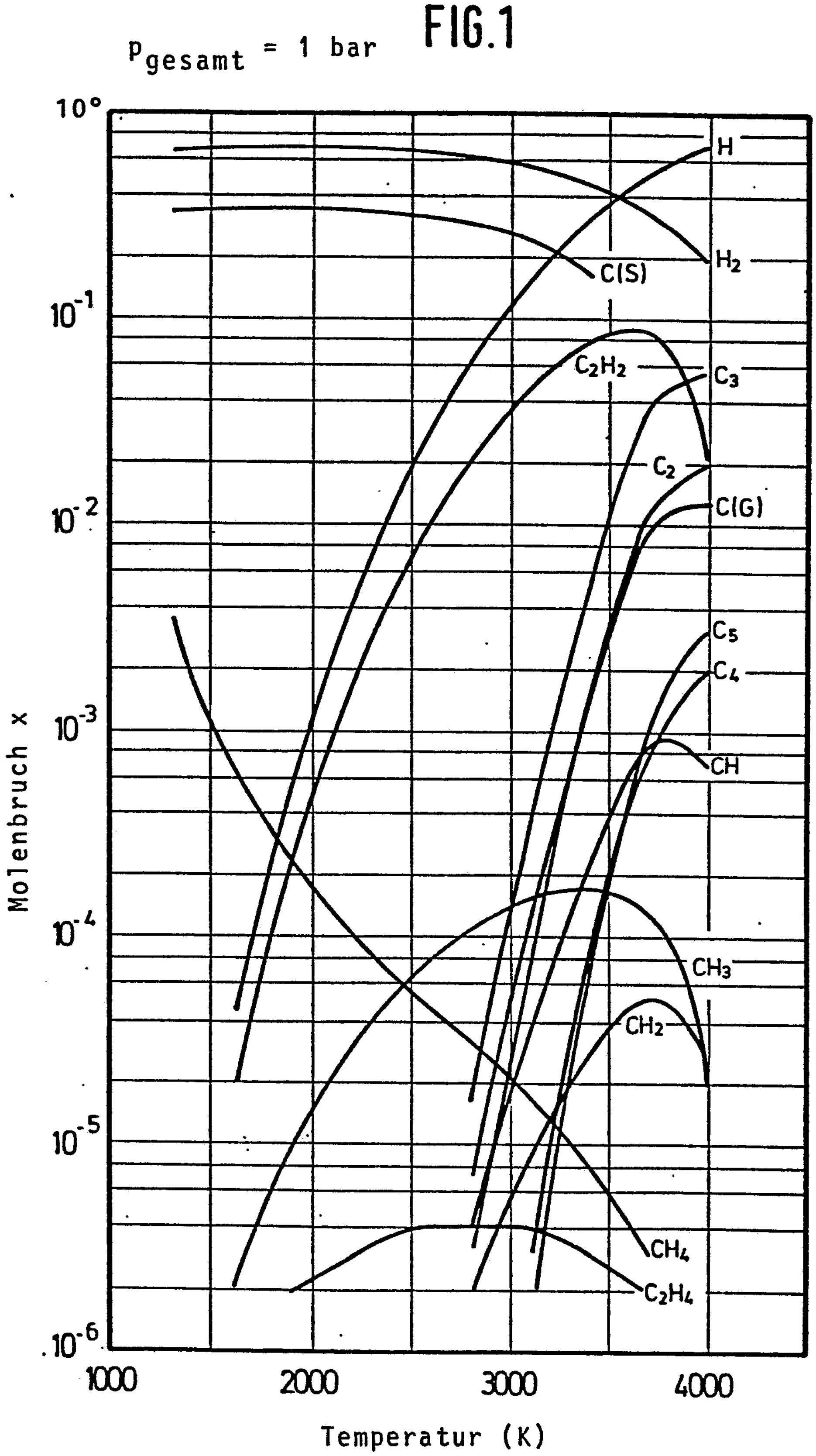
$p_{gesamt}$ = 1 bar
$10^0$
$10^{-1}$
$10^{-2}$
$10^{-3}$
$10^{-4}$
$10^{-5}$
$10^{-6}$
Molenbruch x
1000
2000
3000
4000
Temperatur (K)
H
$H_2$
C(S)
$C_2H_2$
$C_3$
$C_2$
C(G)
$C_5$
$C_4$
CH
$CH_3$
$CH_2$
$CH_4$
$C_2H_4$

FIG.2

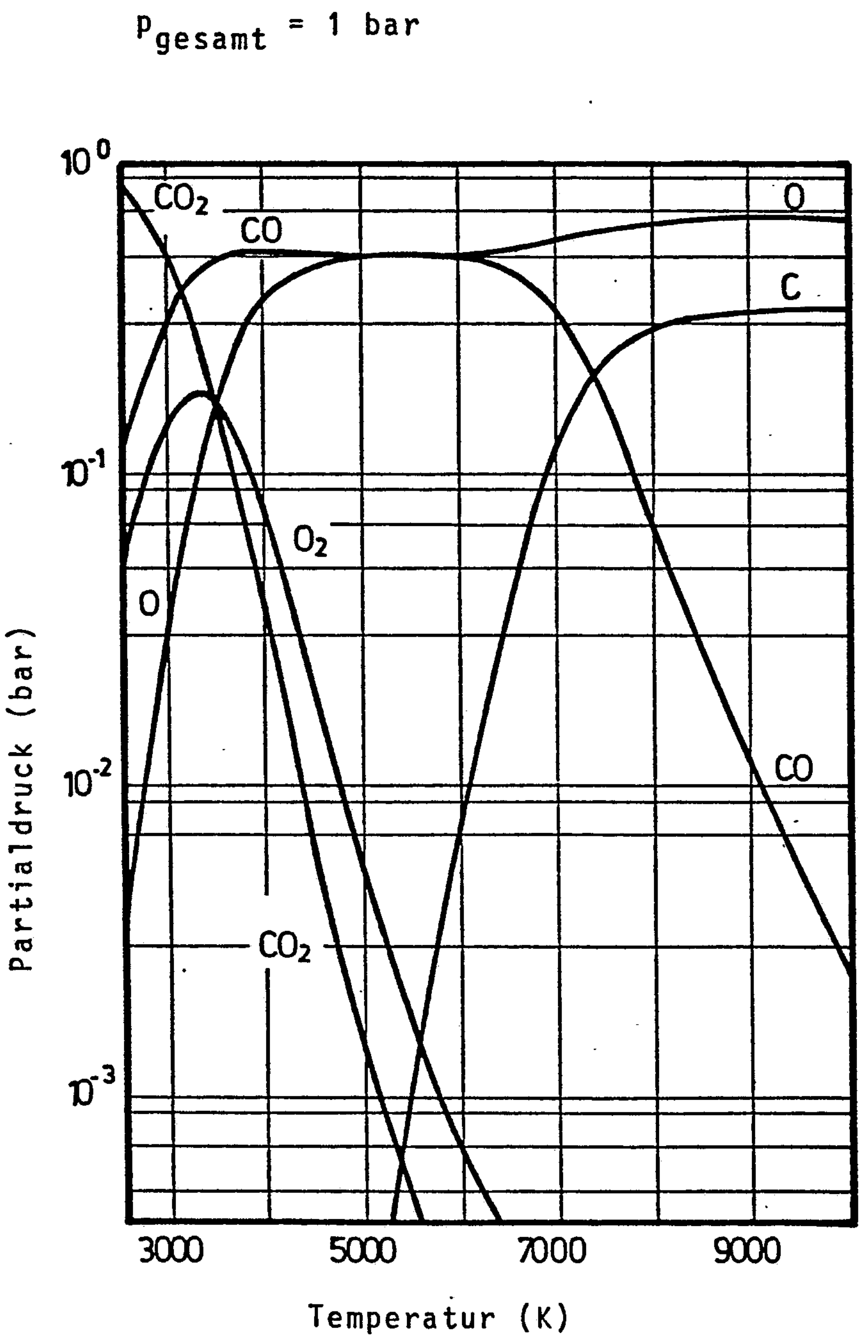
$p_{gesamt}$ = 1 bar
$10^0$
$10^{-1}$
$10^{-2}$
$10^{-3}$
$CO_2$
CO
O
C
$O_2$
O
CO
$CO_2$
3000
5000
7000
9000
Partialdruck (bar)
Temperatur (K)

FIG.3

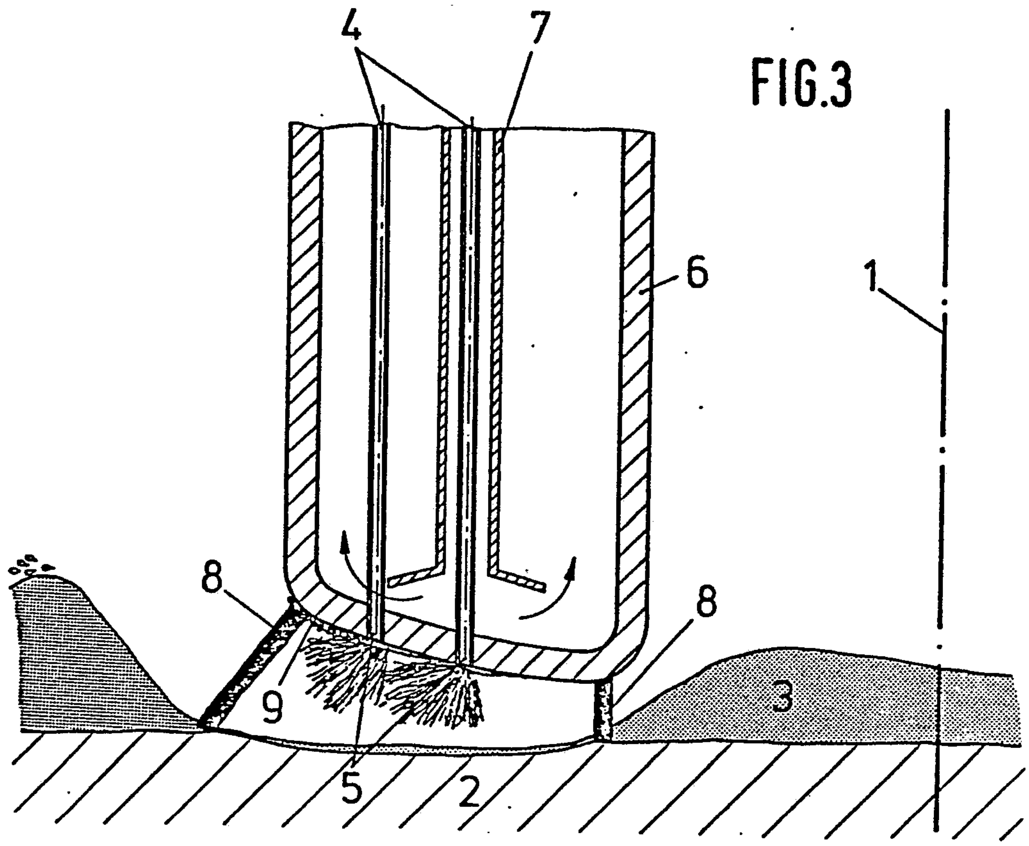


FIG.4